Europäisches Patentamt

European Patent Office

Office européen des brevets

(11) Veröffentlichungsnummer: **0 287 555 B1**

(19)

(12) **EUROPÄISCHE PATENTSCHRIFT**

(45) Veröffentlichungstag der Patentschrift: **09.12.92**

(21) Anmeldenummer: **88890093.3**

(22) Anmeldetag: **14.04.88**

(51) Int. Cl.⁵: **A23B 4/14**, A23L 3/00, A47J 47/10, B65D 81/20, B65D 81/26, B65D 81/24

(54) **Behälter für biologische Substanzen, insbesondere Lebensmittel.**

(30) Priorität: **15.04.87 AT 957/87**

(43) Veröffentlichungstag der Anmeldung:
**19.10.88 Patentblatt 88/42**

(45) Bekanntmachung des Hinweises auf die Patenterteilung:
**09.12.92 Patentblatt 92/50**

(84) Benannte Vertragsstaaten:
**DE ES FR GB IT**

(56) Entgegenhaltungen:
**WO-A-86/07336
CH-A- 160 431
CH-A- 165 379
FR-A- 2 005 440
FR-A- 2 153 332**

(73) Patentinhaber: **Mayer, Rudolf
Mayssengasse 35
A-1170 Wien(AT)**

Patentinhaber: **Solich, Karl
Hütteldorferstrasse 139
A-1140 Wien(AT)**

(72) Erfinder: **Mayer, Rudolf
Mayssengasse 35
A-1170 Wien(AT)**
Erfinder: **Solich, Karl
Hütteldorferstrasse 139
A-1140 Wien(AT)**

(74) Vertreter: **Krause, Walter, Dr. Dipl.-Ing.
Postfach 200 Singerstrasse 8
A-1010 Wien(AT)**

EP 0 287 555 B1

## Beschreibung

Die Erfindung betrifft einen Behälter für biologische Substanzen, insbesondere Lebensmittel, wie Fleisch und Backwaren, der aus einem schalenartigen Unterteil und einem auf diesen passenden, dicht schließenden Deckel gebildet ist, wobei der Unterteil aus einem Mantelteil, einem daran befestigten oder mit diesem einstückigen Boden sowie einem am oberen Ende des Mantelteiles angeordneten Flansch zum Aufsetzen des Deckels unter Zwischenlage einer Dichtung besteht, und wobei am Behälter ein Saug- und Belüftungsventil zum Anschluß einer Vakuumpumpe vorgesehen ist.

Es ist bekannt, Behälter mit einem schalenartigen Unterteil und einem auf diesen passenden Deckel an ihren Rändern durch ineinandergreifende Profile miteinander zu verbinden. Diese und andere bekannte gewöhnliche Behälter werden zur Aufbewahrung von Lebensmitteln, insbesondere Fleisch und Wurst, verwendet, wobei die Behälter häufig in einen Kühlschrank gestellt werden. Nachteilig bei diesen bekannten Behältern ist, daß die darin enthaltenen Lebensmittel selbst im Kühlschrank nur verhältnismäßig kurze Zeit halten. Es wurde daher schon vorgeschlagen, Lebensmittel, insbesondere Fleisch und Wurst, in Folien vakuumverpackt zu lagern. Nachteilig bei dieser Folienpackung ist, daß sie nur für kleinere Portionen geeignet und nur einmal verwendbar sind. Ein weiterer Nachteil besteht darin, daß die Folienpackungen relativ teuer sind und die Verpackungstätigkeit sehr zeitaufwendig ist. Durch Einlegen eines Filters zum Aufsaugen von Flüssigkeit, z.B. von Fleischsaft, wird zwar die Haltbarkeit des Fleisches etwas erhöht, doch sind die Kosten hiefür sehr beträchtlich.

Aus der CH-PS 160 431 ist eine evakuierbare und verschließbare Vorrichtung zum Aufbewahren und Frischhalten von Lebensmitteln bekannt. In diesem Behälter ist ein Etagengestell zur Unterbringung von Aufnahmegefäßen vorgesehen. Diese bekannte Vorrichtung hat den Nachteil, daß zur Entnahme einzelner Aufnahmegefäße das ganze Etagengestell zusammen mit dem übrigen Behälterinhalt herausgenommen werden muß, was die Handhabung der Vorrichtung sehr erschwert. Diese Schrift gibt keinen Hinweis über die Beschaffenheit von solchen Aufnahmegefäßen, damit eine möglichst gute Haltbarkeit von biologischen Substanzen ermöglicht wird. Die Haltbarkeit von Lebensmitteln wird aber in hohem Maße durch die Beschaffenheit der Aufnahmegefäße beeinflußt, hier vor allem ob und in welcher Weise eine Gefäßbelüftung und ein Ableiten der aus Lebensmitteln austretenden Flüssigkeit vorgesehen ist.

Nach der AT-PS 283 100 soll eine Vorrichtung geschaffen werden, mittels welcher im Haushalt und sogar in Großküchen größere Fleischmengen gelagert und je nach Bedarf von Zeit zu Zeit der benötigte Teil verbraucht, der Rest dagegen weiterhin gelagert werden kann.

Dies wird bewirkt, durch einen formsteifen Portionsbehälter, der ein Manometer und einen mit einem Ventil versehenen Stutzen zum Anschluß an eine Vakuumpumpe aufweist.

Diese bekannte Vorrichtung hat jedoch den Nachteil, daß das aufbewahrte Fleisch zwecks Haltbarmachung, nicht rasch und gründlich genug entlüftet werden kann, so daß die angestrebte Haltbarmachung in Frage gestellt wird. Außerdem ist die Entnahme des Fleisches umständlich, weil bei dem in der Praxis wannenartig ausgebildeten Behälter nur das an oberster Stelle befindliche Fleisch gut zugänglich ist.

Ziel der Erfindung ist es, diese Nachteile zu vermeiden und einen Behälter für biologische Substanzen zu schaffen, bei dem die Substanzen rasch und gut durchlüftbar und besser zugänglich sind sowie unter weitgehender Erhaltung ihrer ursprünglichen Qualität hinreichend lange gelagert werden können.

Dieses Ziel wird erfindungsgemäß dadurch erreicht, daß der Mantelteil zylindrisch und der Boden sowie der Deckel kalottenförmig ausgebildet sind und im zylindrischen Mantelteil stapelbare zylindrische Speichereinsätze zur Aufnahme bzw. leichteren Handhabung der biologischen Substanzen angebracht sind, wobei zwischen den einzelnen Speichereinsätzen Zwischenräume für die Luftbewegung vorgesehen und die zylindrischen Speichereinsätze durch an ihren Böden angebrachte Vorsprünge, wie Zapfen oder Rippen, am oberen Rand der jeweils darunterliegenden Einsätze zentriert sind. Durch diese Maßnahmen wird eine sehr gute Haltbarkeit von biologischen Substanzen ermöglicht. Bei Lagerung, z.B. von Fleisch in dieser Art, erhöht sich dessen Haltbarkeit bei einem Vakuum von 90% etwa auf das Vierfache. Weiters kann über das Saug- und Belüftungsventil rasch Luft in den Behälter eingelassen werden, wodurch eine rasche Öffnung des Behälters und eine Entnahme der darin enthaltenen Substanzen möglich wird. Durch die zwischen den einzelnen Einsätzen vorgesehenen Zwischenräume für die Luftbewegung und durch die an den Böden der Speichereinsätze angebrachten Vorsprünge, wie Zapfen oder Rippen, werden eine besonders günstige Durchlüftung, Anordnung und Zugänglichkeit der biologischen Substanzen gewährleistet.

Die CH-PS 425 428 befaßt sich mit einem Vakuumbehälter aus Kunststoff, bestehend aus einem schachtelförmigen Unterteil und einem Deckel sowie mit der Zentrierung des rechteckigen Deckels auf dem rechteckigen Unterteil. Von einer zylindrischen Ausbildung des Behälters, einem kalottenförmigen Deckel und Boden sowie von stapelbaren zylindrischen Speichereinsätzen wie beim Erfindungsgegenstand ist nirgends die Rede.

In der CH-PS 397 398 ist ein quaderförmiger Behälter beschrieben, in den übereinanderliegende Schubladen eingesetzt werden. Dieser bekannte Behälter hat den Nachteil, daß er wesentlich schwieriger herzustellen ist, daß die Durchlüftung des Behälters problematisch ist und daß er bei gleicher Wandstärke nicht so hohen Drücken standhält wie der erfindungsgemäße Behälter.

Die CH-PS 165 379 beschreibt einen Aufnahmebehälter, der mittels einer oder mehrerer Türen verschließbar ist, so daß eingelegtes Gut jeweils für sich herausgenommen werden kann. Diese Patentschrift zeigt jedoch keine stapelbaren Speichereinsätze, sondern lediglich eingebaute Trennwände bzw. Tablare.

Äußerst günstig ist es hiebei, wenn die Zylindrische Seitenwand der Speichereinsätze an einander gegenüberliegenden Stellen, ggf. ausgestanzte und/oder ausgebogene, Durchbrechungen hat, die gleichzeitig als Handgriff und als Belüftungsöffnung dienen. Durch diese Maßnahme wird die Wirkung der Speichereinsätze allenfalls bei gleichzeitiger Materialersparnis, wesentlich verbessert.

Die Konservierungsdauer der bisherigen Substanzen kann in einfacher Weise im erfindungsgemäßen Behälter dadurch weiter erhöht werden, daß er am oder knapp über dem Boden jedes Speichereinsatzes eine Auflage, wie ein Sieb, ein Lochblech oder einen Rost, zur flüssigkeitsfreien bzw. flüssigkeitsarmen Speicherung der biologischen Substanzen, insbesondere Fleisch, aufweist.

Die Erfindung soll nun anhand der schematischen Zeichnung näher erläutert werden. Es zeigen:

Fig. 1 einen Schnitt durch eine Ausführungsform des erfindungsgemäßen Behälters, und

Fig. 2 ein Detail des Behälters nach Fig. 1 im Schnitt.

Der Behälter 1 für biologische Substanzen, wie Fleisch und Backwaren, ist aus einem schalenartigen Unterteil 2 und einem auf diesen passenden, dicht schließenden Deckel 3 gebildet. Der Behälter 1 besteht aus einem zylindrischen Mantelteil 4, einem daran befestigten oder mit diesem einstückigen Boden 5 sowie einem im oberen Ende des Mantelteils 4 angeordneten Flansch 6 Zum Aufsetzen des Deckels 3 unter Zwischenlage einer vorzugsweise elastischen Dichtung 7 und ist festigkeitsmäßig als Unterdruckbehälter ausgebildet. Im Deckel 3 ist ein Saug- und Belüftungsventil 8 zum Anschluß einer nicht dargestellten Vakuumpumpe vorgesehen. Der Behälter 1 ruht auf Füßen 9 und ist mit einem Vakuummeter 10 ausgestattet.

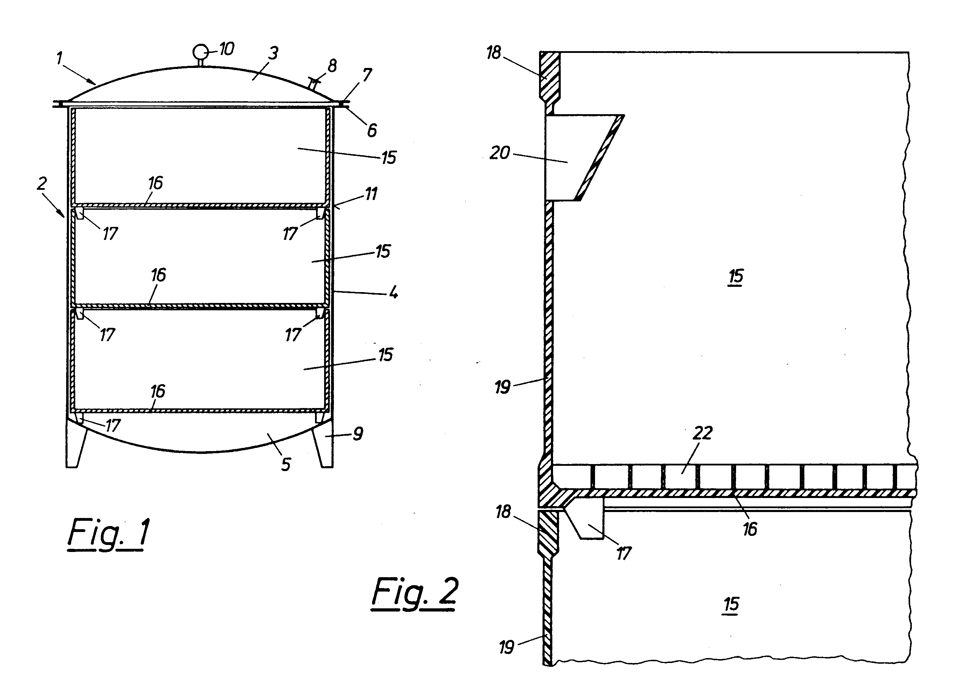

Bei der dargestellten Ausführungsform sind im zylindrischen Mantelteil 4 stapelbare Speichereinsätze 15 zur Aufnahme bzw. leichteren Handhabung der biologischen Substanzen angebracht. Dabei sind zwischen den einzelnen Einsätzen 15 Zwischenräume für die Luftbewegung vorgesehen und die Speichereinsätze 15 sind durch an ihren Böden 16 angebrachte Vorsprünge 17, wie Zapfen oder Rippen, am oberen Rand 18 der darunterliegenden Einsätze 15 zentriert. Die eine ebenfalls zylindrische Seitenwand 19 aufweisenden Speichereinsätze 15 haben an einander gegenüberliegenden Stellen, ggf. ausgestanzte und/oder ausgebogene Durchbrechungen 20, die gleichzeitig als Handgriff und als Belüftungsöffnung dienen (siehe Fig. 2). Zylindrische Mantelteile 4 können ein wellen- oder sickenartiges Längsprofil aufweisen, wobei der Mantelteil 4 aus zwei gepreßten Hälften gebildet ist, die miteinander, z.B. durch Schweißung oder Schraubung, verbunden sind.

Der Behälter 1 kann aus Metall bestehen und eine glatte Außenfläche aufweisen. Dabei kann der zylindrische Mantelteil 4 aus gerolltem Blech hergestellt und an seiner Innenseite mit ebenfalls aus Blech bestehenden Verstärkungsringen versehen sein, wobei die Verstärkungsringe mit dem Mantelteil 4, z.B. durch Pinktschweißung, fest verbinden sind.

Gemäß der dargestellten Ausführungsform weist der Behälter am oder knapp über seinem Boden 5 bzw. am oder knapp über dem Boden 16 jedes Speichereinsatzes 15 eine Auflage 22, wie ein Sieb, ein Lochblech oder einen Rost zur Separierung der gespeicherten biologischen Substanzen, insbesondere Fleisch von den von diesen allenfalls ausgeschiedenen Flüssigkeiten auf.

Das Vakuummeter 10 kann in einer Mulde des nach außen gewölbten Deckels 3 versenkt angeordnet sein. In Übereinstimmung mit der Fig. 1 ist das Saug- und Belüftungsventil 8 am nach außen gewölbten Deckel 3 außermittig vorstehend angeordnet, wobei die höchste Stelle des Deckels 3 die höchste Stelle des Ventils 8 überragt. Der Behälter kann gemäß einer vorzugsweisen Ausführungsform mindestens einen schalenartigen Behälterteil aus mit Metalleinlagen versehenem Kunststoff aufweisen (nicht dargestellt), wodurch eine besonders hohe Stabilität und eine angenehme Handhabung gewährleistet werden.

Bei der erfindungsgemäßen Anordnung ist mittels des Vakuummeters 10 für die einzufüllenden Substanzen ein geeigneter Unterdruck auswählbar. Die Handhabung der mit Armaturen ausgerüsteten erfindungsgemäßen Unterdruckbehälter ist sehr einfach. Die Behälter 1 werden vorzugsweise auf ein Vakuum von 70 bis 90% ausgepumpt, um eine sehr gute Haltbarkeit der eingefüllten biologischen Substanzen zu gewährleisten, Kunststoffbehälter werden vorwiegend im Gastgewerbe, Metallbehälter hingegen vorwiegend in Fleischereibetrieben verwendet.

## Patentansprüche

1. Behälter für biologische Substanzen, insbesondere Lebensmittel, wie Fleisch und Backwaren, der aus einem schalenartigen Unterteil und einem auf diesen passenden, dicht schließenden Deckel gebildet ist, wobei der Unterteil aus einem Mantelteil, einem daran befestigten oder mit diesem einstückigen Boden sowie einem am oberen Ende des Mantelteils angeordneten Flansch zum Aufsetzen des Deckels unter Zwischenlage einer Dichtung besteht, und wobei am Behälter ein Saug- und Belüftungsventil zum Anschluß einer Vakuumpumpe vorgesehen ist, **dadurch gekennzeichnet,** daß der Mantelteil zylindrisch und der Boden sowie der Deckel kalottenförmig ausgebildet sind und im zylindrischen Mantelteil (4) stapelbare zylindrische Speichereinsätze (15) zur Aufnahme bzw. leichteren Handhabung der biologischen Substanzen angebracht sind, wobei zwischen den einzelnen Speichereinsätzen (15) Zwischenräume für die Luftbewegung vorgesehen und die zylindrischen Speichereinsätze (15) durch an ihren Böden angebrachte Vorsprünge (17), wie Zapfen oder Rippen, am oberen Rand (18) der jeweils darunterliegenden Einsätze (15) zentriert sind.

2. Behälter nach Anspruch 1, **dadurch gekennzeichnet,** daß die zylindrische Seitenwand (19) der Speichereinsätze (15) an einander gegenüberliegenden Stellen, ggf. ausgestanzte und/oder ausgebogene, Durchbrechungen (20) hat, die gleichzeitig als Handgriff und als Belüftungsöffnung dienen.

3. Behälter nach Anspruch 1 oder 2, **dadurch gekennzeichnet,** daß er am oder knapp über seinem Boden bzw. am oder knapp über dem Boden (16) jedes zylindrischen Speichereinsatzes (15) eine Auflage (22), wie ein Sieb, ein Lochblech oder einen Rost zur flüssigkeitsfreien bzw. flüssigkeitsarmen Speicherung der biologischen Substanzen, insbesondere Fleisch, aufweist.

## Claims

1. A container for biological substances, in particular food-stuffs, such as meat or bread and confectionery, which is formed of a pot-shaped lower part and a tightly fitting lid, the lower part comprising a wall and a bottom attached to or formed integral with it, and a flange running along the upper edge of the said wall, upon which the lid is placed, with a gasket arranged in between, the container being provided with a suction and ventilation valve for connection of a vacuum pump, **wherein** the wall is shaped cylindrically, and bottom and lid both are configured as spherical caps, the cylindrical wall (4) holding a stack of cylindrical trays (15) for storage and better handling of the biological substances, and the individual trays (15) being placed at a distance from each other to permit air circulation, and the bottoms of the cylindrical trays (15) being provided with projections (17), such as pegs or ribs, such that each tray (15) is centered on the upper edge (18) of the corresponding tray (15) underneath.

2. A container according to claim 1, **wherein** the cylindrical side-wall (19) of each storage tray (15) has openings (20) placed opposite each other, which are made by punching and/or bending, and which are used for handling and ventilation at the same time.

3. A container according to claim 1 or 2, **wherein** an inset (22), such as a sieve, a perforated plate or a grid is provided at the bottom of the container or slightly above it, or rather, at or slightly above the bottom (16) of each cylindrical storage tray (15), which inset (22) serves for dry or almost dry storage of biological substances, in particular meat.

## Revendications

1. Récipient pour substances biologiques, notamment des vivres, telles que de la viande et des pâtisseries, qui est constitué d'une partie inférieure en forme de cuvette et d'un couvercle s'adaptant à celle-ci et la fermant de façon étanche, cependant que la partie inférieure est constituée par une partie enveloppe par un fond fixé sur elle ou bien d'un seul tenant avec elle, ainsi que par une bride disposée à l'extrémité supérieure de la partie enveloppe pour la mise en place du couvercle avec interposition d'un joint d'étanchéité et qu'il est prévu sur le récipient une vanne d'aspiration et d'aération pour le raccordement d'une pompe à vide, récipient caractérisé en ce que la partie enveloppe revêt une forme cylindrique et que le fond ainsi que le couvercle revêtent une forme en calotte, et en ce que dans la partie enveloppe cylindrique (4) sont installés des plateaux cylindriques de stockage (15) empilables pour recevoir les substances biologiques ou pour en faciliter la manipulation, tandis qu'entre les différents plateaux de stockage (15) il est prévu des espaces intermédiaires pour le mouvement de l'air, et en ce que les plateaux de stockage cylindriques (15), grâce à des saillies (17) rapportées sur leurs fonds, tels que des tenons ou des nervures, sont centrés sur le bord supérieur (18) des plateaux (15) placés respectivement en-dessous.

2. Récipient selon la revendication 1, caractérisé en ce que la paroi latérale cylindrique (19) des plateaux de stockage (15) comporte à des emplacements opposés l'un à l'autre, éventuellement obtenus par matriçage ou pliage vers l'extérieur des passages (20) qui servent simultanément de poignées et d'ouvertures d'aération.

3. Récipient selon la revendication 1 ou la revendication 2, caractérisé en ce qu'il comporte sur son fond ou juste au-dessus ou bien sur les fonds (16) de chaque plateau cylindrique de stockage (15) ou juste au-dessus, un support (22), tel qu'un tamis, une tôle perforée ou bien une grille, pour permettre le stockage en absence de liquide ou bien avec peu de liquide, des substances biologiques, notamment de la viande.

Fig. 1

Fig. 2